# EUROPEAN PATENT SPECIFICATION

(11) **EP 2 644 872 B1**
(45) Date of publication and mention of the grant of the patent: **26.06.2019**
(21) Application number: 13161571.8
(22) Date of filing: 28.03.2013
(51) Int. Cl.: F02D 41/00, F02D 19/06

(54) **A vehicle comprising an engine capable of producing a driving force by combustion of a fuel containing gasoline and alcohol**
Fahrzeug mit einem Motor, der zum Erzeugen einer Antriebskraft durch Verbrennung eines Kraftstoffs in der Lage ist, der Benzin und Alkohol enthält
Véhicule comprenant un moteur capable de produire une force d'entraînement par combustion d'un combustible contenant de l'essence et d'alcool

(30) Priority: 30.03.2012 JP 2012080372
(43) Date of publication of application: 02.10.2013
(73) Proprietor: Yamaha Hatsudoki Kabushiki Kaisha, Iwata-shi, Shizuoka 438-8501 (JP)
(72) Inventor: Nonaka, Daisuke, Iwata-shi, Shizuoka 438-8501 (JP); Asakura, Yutaka, Iwata-shi, Shizuoka 438-8501 (JP); Sawada, Yuuichirou, Iwata-shi, Shizuoka 438-8501 (JP); Koya, Takao, Iwata-shi, Shizuoka 438-8501 (JP)
(74) Representative: Grünecker Patent- und Rechtsanwälte PartG mbB

(56) References cited:
- CA-A1- 2 406 292
- DE-A1-102009 044 946
- US-A1- 2009 210 134
- US-A1- 2010 007 874

## Description

The present invention relates to a vehicle including an engine for which fuels containing gasoline and alcohol are usable.

Note that this application claims priority on Patent Application No. 2012-80372 filed in Japan on March 30, 2012, the entire contents of which are hereby incorporated by reference.

In order to prevent, for example, clogging of a fuel pipe or a fuel supply device in a vehicle, a fuel filter is conventionally provided inside the fuel pipe or fuel tank. For example, Patent Literature 1 discloses, as an engine of a vehicle, an engine for which a fuel containing gasoline and alcohol is usable.

As a fuel filter is used for a long period of time, substances such as solid matter or gel matter (which will hereinafter be referred to as "foreign matter") are accumulated in the fuel filter. In order to prevent clogging of a fuel filter, it is necessary to replace or clean the fuel filter. A fuel filter is replaced or cleaned when a distance traveled by a vehicle is equal to or greater than a given value, for example. Hereinafter, replacement or cleaning of a fuel filter will be referred to as "fuel filter maintenance".

Such a vehicle is known from JP-A-2010-216485 or from CA2406292A1.

Actually, in a vehicle including an engine for which a fuel containing gasoline and alcohol is usable, the inventor of the present invention has experienced a situation where clogging of a fuel filter occurs even when a traveled distance of the vehicle is lower than the given value. To cope with such a situation, for a vehicle including an engine for which a fuel containing gasoline and alcohol is usable, fuel filter maintenance may be performed early in order to prevent clogging of a fuel filter. For example, a traveled distance used as a criterion for fuel filter maintenance may be set at a different given value lower than the above-mentioned given value. However, even in a vehicle including an engine for which a fuel containing gasoline and alcohol is usable, the inventor of the present invention has sometimes experienced a situation where clogging of a fuel filter does not occur even though a traveled distance of the vehicle is greater than the different given value. If a traveled distance used as a criterion for fuel filter maintenance is reduced in a uniform manner for such vehicles, maintenance will be performed at a time when maintenance is fundamentally unnecessary, which results in additional cost and unnecessary time and trouble.

Accordingly, an object of the present invention is to provide a vehicle that includes an engine for which a fuel containing gasoline and alcohol is usable, and that allows a user to grasp an appropriate time for maintenance of a fuel filter.

The inventor of the present invention has conducted diligent studies and has consequently found that some fuels are likely to cause clogging of a fuel filter when the percentage of alcohol (or concentration of alcohol) is high. On the basis of this finding, the inventor of the present invention has implemented the present invention described below.

A vehicle according to the present invention includes: an engine capable of producing a driving force by combustion of a fuel containing gasoline and alcohol; and a fuel filter located inside a fuel tank that stores the fuel or inside a fuel passage through which the fuel supplied from the fuel tank flows, the vehicle further including: a percentage determining device that determines an alcohol percentage in the fuel; a first counting device that counts a value of a first parameter including any one of a traveled distance of the vehicle obtained when the alcohol percentage is equal to or higher than a first reference percentage, a physical quantity that uniquely varies in accordance with the traveled distance obtained when the alcohol percentage is equal to or higher than the first reference percentage, or a time elapsed when the alcohol percentage is equal to or higher than the first reference percentage after the fuel has been stored; a first determination device that determines whether or not the value of the first parameter counted by the first counting device has reached a first determination value; and a notification device that provides notification upon determination by the first determination device that the value of the first parameter has reached the first determination value.

In the vehicle according to the present invention, the first counting device counts the value of the first parameter obtained when the alcohol percentage in the fuel is equal to or higher than the first reference percentage at which foreign matter is deemed likely to be accumulated. Then, when the value of the first parameter has reached the first determination value at which replacement of the fuel filter is deemed necessary, notification of this fact is provided to a user. Thus, the user can recognize that the fuel filter is probably clogged, and can grasp an appropriate time for maintenance of the fuel filter.

According to one embodiment of the present invention, the first counting device preferably includes a first storage unit that stores the value of the first parameter, the first counting device preferably being configured to store, in the first storage unit, the value of the first parameter obtained when the alcohol percentage is equal to or lower than a second reference percentage which is lower than the first reference percentage, and to then restart counting from the value of the first parameter, stored in the first storage unit, when the alcohol percentage is equal to or higher than the first reference percentage.

It is believed that when the alcohol percentage in the fuel is reduced (e.g. , when the alcohol percentage is equal to or lower than the second reference percentage), clogging of the fuel filter does not proceed. However, foreign matter accumulated in the fuel filter when the alcohol percentage in the fuel is high (e.g., equal to or higher than the first reference percentage) is presumably still adhered to the fuel filter. Therefore, the first counting device temporarily stops counting the value of the first parameter when the alcohol percentage in the fuel is low, and then restarts counting from the previously stored value when the alcohol percentage in the fuel is increased (e.g., when the alcohol percentage is equal to or higher than the first reference percentage), thus making it possible to more accurately estimate clogging of the fuel filter.

According to one embodiment of the present invention, the first counting device is preferably configured to count the value of the first parameter in accordance with the alcohol percentage so that the higher the alcohol percentage, the greater the amount of change in the value of the first parameter.

It is believed that the higher the alcohol percentage in the fuel, the more likely the fuel filter will be clogged, and therefore, clogging of the fuel filter can be more accurately estimated when the first counting device is configured as described above.

According to one embodiment of the present invention, the notification device is preferably configured to provide, during, before or after the notification, different notification responsive to the value of the first parameter counted by the first counting device.

The notification responsive to the value of the first parameter is provided in this manner, thereby allowing the user to grasp the degree of clogging of the fuel filter in more detail.

According to one embodiment of the present invention, the vehicle preferably further includes: a second counting device that counts a value of a second parameter including any one of a traveled distance of the vehicle obtained when the alcohol percentage is equal to or lower than a third reference percentage which is lower than the first reference percentage, a physical quantity that uniquely varies in accordance with the traveled distance obtained when the alcohol percentage is equal to or lower than the third reference percentage, or a time elapsed when the alcohol percentage is equal to or lower than the third reference percentage after the fuel has been stored; and a second determination device that determines whether or not the value of the second parameter counted by the second counting device has reached a second determination value, wherein the first counting device is configured to reset the value of the first parameter, counted by the first counting device, upon determination by the second determination device that the value of the second parameter has reached the second determination value.

The inventor of the present invention has found that when the vehicle has traveled a certain distance by using the fuel in which the alcohol percentage is low (e.g., equal to or lower than the third reference percentage), foreign matter adhered to the fuel filter is removed and the fuel filter is unclogged. Therefore, when the vehicle has traveled a certain distance by using the fuel in which the alcohol percentage is low, the value of the first parameter counted by the first counting device is reset as described above, thus making it possible to avoid providing notification that the fuel filter is probably clogged even though the fuel filter is actually not clogged.

According to one embodiment of the present invention, the notification device is preferably configured to provide different notification upon determination by the second determination device that the value of the second parameter has reached the second determination value.

The different notification is provided in this manner, thereby allowing the user to recognize that the fuel filter is presumably unclogged.

According to one embodiment of the present invention, the notification device is preferably configured to provide different notification when the second counting device counts the value of the second parameter.

The different notification is provided in this manner, thereby allowing the user to recognize that the fuel filter is being unclogged.

According to one embodiment of the present invention, the notification device is preferably configured to provide, when the second counting device counts the value of the second parameter, notification responsive to the value of the second parameter counted by the second counting device, instead of or together with the different notification.

The notification responsive to the value of the second parameter is provided in this manner, thereby allowing the user to grasp the degree of unclogging of the fuel filter in more detail.

According to one embodiment of the present invention, the second counting device is preferably configured to reset, when the alcohol percentage is higher than the third reference percentage, the value of the second parameter counted by the second counting device.

Thus, the value of the first parameter counted by the first counting device will be reset when the fuel filter is more probably unclogged. Hence, when the fuel filter is clogged, notification of this fact can be more reliably provided to the user.

According to one embodiment of the present invention, the second counting device preferably includes a second storage unit that stores the value of the second parameter, the second counting device preferably being configured to store, in the second storage unit, the value of the second parameter obtained when the alcohol percentage is lower than the first reference percentage and higher than the third reference percentage, and to then restart counting from the value of the second parameter, stored in the second storage unit, when the alcohol percentage is equal to or lower than the third reference percentage.

Thus, when the fuel having the alcohol percentage at which neither clogging nor unclogging of the fuel filter proceeds is used, the second counting device temporarily stops counting the value of the second parameter, and then restarts counting from the previously stored value when the alcohol percentage in the fuel is low (e.g., equal to or lower than the third reference percentage), thereby making it possible to more accurately estimate unclogging of the fuel filter.

According to one embodiment of the present invention, the second counting device is preferably configured to count the value of the second parameter in accordance with the alcohol percentage so that the lower the alcohol percentage, the greater the amount of change in the value of the second parameter.

It is believed that the lower the alcohol percentage in the fuel, the more likely the unclogging of the fuel filter will proceed, and therefore, the degree of unclogging of the fuel filter can be more accurately estimated when the second counting device is configured as described above.

According to one embodiment of the present invention, the notification device preferably includes a display device.

Thus, the user can visually recognize information on the fuel filter, and can easily grasp the degree of clogging or unclogging of the fuel filter.

The present invention provides a vehicle that includes an engine for which a fuel containing gasoline and alcohol is usable, and that allows a user to grasp an appropriate time for maintenance of a fuel filter.

FIG. 1 is a side view illustrating a motorcycle according to a preferred embodiment of the present invention.
FIG. 2 is a schematic diagram illustrating an engine and a controller according to the preferred embodiment of the present invention.
FIG. 3 is a front view of a display panel according to the preferred embodiment of the present invention.
FIG. 4A is a front view of a digital panel according to the preferred embodiment of the present invention, on which an odometer is displayed.
FIG. 4B is a front view of the digital panel on which a trip meter is displayed.
FIG. 4C is a front view of the digital panel on which a clogging meter is displayed.
FIG. 4D is a front view of the digital panel on which a recovery meter is displayed.
FIG. 4E is a front view of the digital panel on which a clock is displayed.
FIG. 4F is a front view of the digital panel on which an ethanol percentage meter is displayed.
FIG. 5 is a block diagram for control of notification of fuel filter clogging in the preferred embodiment of the present invention.
FIG. 6 is a flow chart illustrating a procedure of control of notification of fuel filter clogging in the preferred embodiment of the present invention.
FIG. 7 is a timing chart for control of notification of fuel filter clogging in the preferred embodiment of the present invention.

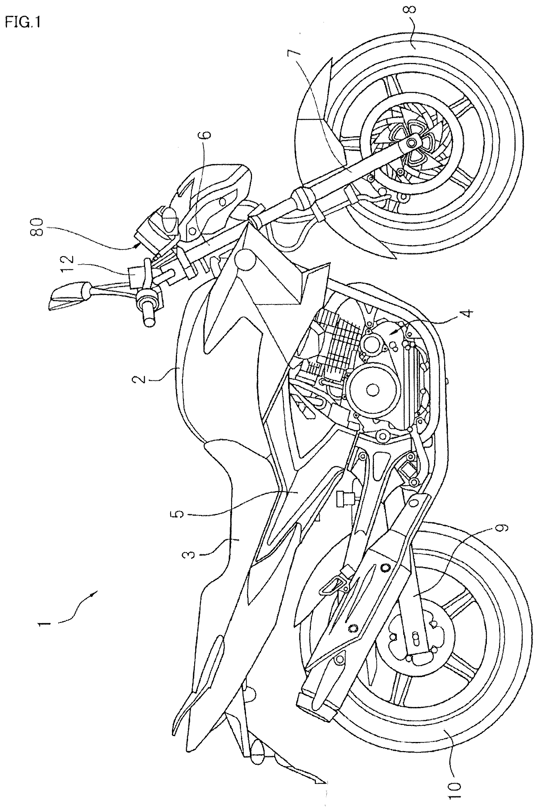

Hereinafter, a preferred embodiment of the present invention will be described. As illustrated in FIG. 1, a vehicle according to the present preferred embodiment is a motorcycle 1. However, the motorcycle 1 is not limited to any particular type of motorcycle but may be any type of motorcycle such as a "scooter type", "moped type", "off-road type" or "street type" motorcycle. The vehicle according to the present invention is not limited to a motorcycle but may be a straddle-type vehicle that a rider (user) straddles when getting on the vehicle, or a vehicle similar thereto. Examples of such a straddle-type vehicle include, in addition to a motorcycle, an ATV (All Terrain Vehicle), for example.

Examples of fuels usable for the motorcycle 1 include gasoline, alcohol such as ethanol, and a mixture of gasoline and alcohol. The following description will be made on the assumption that ethanol or a mixture of ethanol and gasoline, for example, is used as a fuel in the present preferred embodiment.

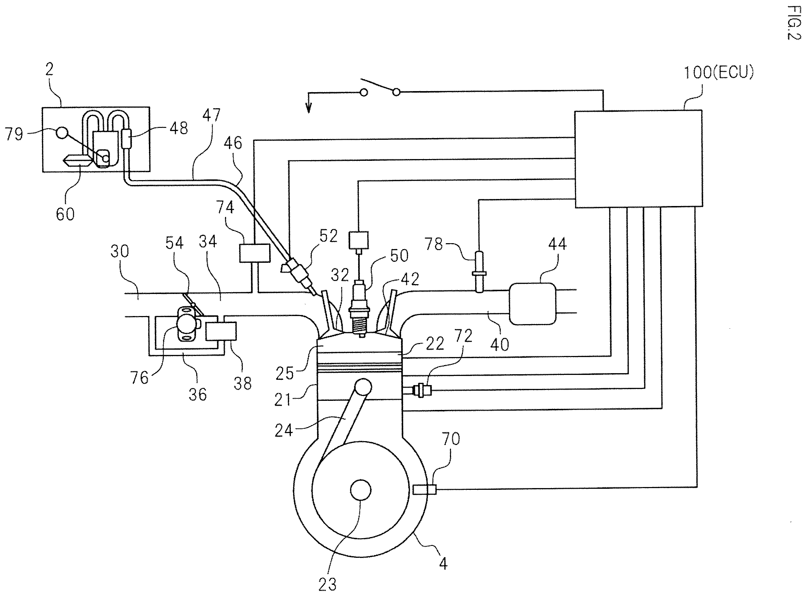

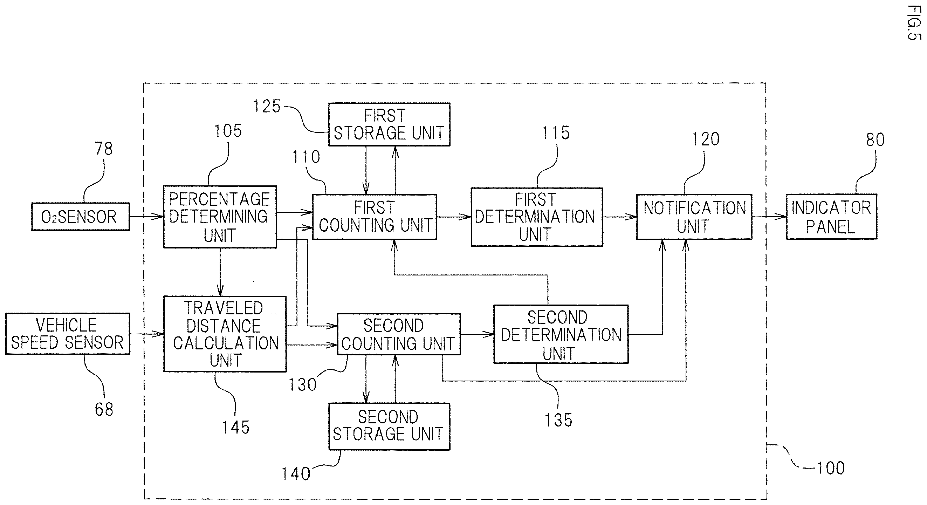

As illustrated in FIG. 1, the motorcycle 1 preferably includes: a fuel tank 2 that stores a fuel; a seat 3 on which a rider sits while riding on the motorcycle 1; an engine 4 serving as an internal combustion engine; and a body frame 5 that supports these components. A head pipe 6 is provided forward of the body frame 5 and supports a steering shaft (not illustrated). At an upper portion of the steering shaft, a handlebar 12 is provided. At a lower portion of the steering shaft, a front fork 7 is provided. At a lower end portion of the front fork 7, a front wheel 8 is rotatably supported. The body frame 5 supports a swing arm 9 in such a manner that the swing arm 9 is swingable. At a rear end portion of the swing arm 9, a rear wheel 10 is rotatably supported. The motorcycle 1 is provided with a vehicle speed sensor 68 (see FIG. 5). The vehicle speed sensor 68 detects a rotational speed of the rear wheel 10. The vehicle speed sensor 68 outputs a vehicle speed signal to an ECU 100 (see FIG. 2) on the basis of the detected rotational speed.

As illustrated in FIG. 2, the engine 4 preferably includes: a cylinder 21; a piston 22 that reciprocates inside the cylinder 21; a crankshaft 23; and a connecting rod 24 through which the piston 22 and the crankshaft 23 are connected to each other. The engine 4 preferably further includes: a fuel injection valve 52 serving as a fuel injection device through which a fuel is injected; and an ignition device 50 that ignites the fuel inside a combustion chamber 25. The engine 4 is provided with: a rotational speed sensor 70 that detects a rotational speed of the crankshaft 23 (i.e. , a rotational frequency of the crankshaft 23 per unit time) ; and a temperature sensor 72 that detects a temperature of the engine 4. Note that the rotational speed of the crankshaft 23 will hereinafter be referred to as the "rotational speed of the engine 4". The temperature sensor 72 may detect a temperature of a portion of the engine 4 (such as the cylinder of the engine 4, for example), or may detect a temperature of cooling water when the engine 4 is a water-cooled engine. In other words, the temperature sensor 72 may directly detect the temperature of the engine 4, or may indirectly detect the temperature of the engine 4 by detecting the temperature of cooling water, for example.

The engine 4 preferably further includes : an intake passage 30 through which air is introduced into the combustion chamber 25; an intake valve 32 that opens and closes communication between the intake passage 30 and the combustion chamber 25; an exhaust passage 40 through which exhaust gas inside the combustion chamber 25 is discharged; and an exhaust valve 42 that opens and closes communication between the combustion chamber 25 and the exhaust passage 40. In the present preferred embodiment, the fuel injection valve 52 is located so as to inject the fuel into the intake passage 30. Note that the fuel injection valve 52 may directly inject the fuel into the combustion chamber 25. Alternatively, the engine 4 may include two types of fuel injection valves, one of which injects the fuel into the intake passage 30 and the other one of which injects the fuel into the combustion chamber 25.

The intake passage 30 is provided with a pressure sensor 74 that detects an intake pressure which is an internal pressure of the intake passage 30. The intake passage 30 preferably includes: a main passage 34 in which a throttle valve 54 is contained; and a bypass passage 36 through which regions of the main passage 34 located upstream and downstream of the throttle valve 54 are communicated with each other. The throttle valve 54 is provided with a throttle position sensor 76 that detects the degree of opening of the throttle valve 54. The bypass passage 36 is provided with a bypass air quantity adjustment mechanism 38 that controls a flow rate of air by adjusting a flow passage cross-sectional area of the bypass passage 36.

The exhaust passage 40 is provided with a catalyst 44. The exhaust passage 40 is further provided with an O₂ sensor 78 that serves as an air-fuel ratio sensor and detects oxygen contained in the exhaust gas. The air-fuel ratio sensor may be a sensor at least capable of detecting whether an air-fuel ratio is in a "rich" region or a "lean" region. The O₂ sensor 78 according to the present preferred embodiment can detect whether an air-fuel ratio is in the rich region or lean region. Alternatively, a sensor (linear A/F sensor) that linearly outputs an air-fuel ratio, i.e., a sensor that outputs an air-fuel ratio itself, may naturally be used as the air-fuel ratio sensor.

The fuel tank 2 and the fuel injection valve 52 are connected to each other through a fuel pipe 46. The fuel pipe 46 preferably includes a fuel passage 47 through which the fuel supplied from the fuel tank 2 flows. Inside the fuel tank 2, there are provided a fuel pump 48 through which the fuel is supplied to the fuel passage 47, a fuel filter 60, and a fuel sensor 79 that detects the amount of the fuel inside the fuel tank 2. A specific configuration of the fuel sensor 79 is not limited to any particular configuration. For example, a known sensor such as a level sensor, for example, may suitably be used as the fuel sensor 79. In the motorcycle 1 according to the present preferred embodiment, an ethanol percentage (i.e., an alcohol percentage) is estimated on the basis of a value detected by the O₂ sensor 78. However, a sensor that detects the ethanol percentage in the fuel may be provided inside of the fuel tank 2 or inside of the fuel passage 47. Although the fuel filter 60 is provided inside of the fuel tank 2 in the present preferred embodiment, the fuel filter 60 does not necessarily have to be provided inside of the fuel tank 2. Alternatively, the fuel filter 60 may be located inside of the fuel passage 47, or the fuel filter 60 may be located inside of each of the fuel tank 2 and the fuel passage 47.

As used herein, "determining an ethanol percentage" includes both of "detecting an ethanol percentage" and "estimating an ethanol percentage". A method for determining an ethanol percentage is not limited to any particular method as long as an ethanol percentage can eventually be determined.

The motorcycle 1 preferably includes the ECU (Electric Control Unit) 100 functioning as a controller that controls the engine 4. The ECU 100 at least controls notification of clogging of the fuel filter 60. As illustrated in FIG. 5, the ECU 100 preferably includes a percentage determining unit 105 that determines the ethanol percentage in the fuel on the basis of the value detected by the O₂ sensor 78. The ECU 100 preferably further includes a traveled distance calculation unit 145 that calculates a traveled distance of the motorcycle 1 on the basis of the vehicle speed detected by the vehicle speed sensor 68.

The ECU 100 preferably further includes a first counting unit 110, a first determination unit 115, a notification unit 120, and a first storage unit 125. The first counting unit 110 counts a value of a first parameter. The first parameter may be a traveled distance of the motorcycle 1 obtained when the ethanol percentage, contained in the fuel and determined by the percentage determining unit 105, is equal to or higher than a first reference percentage. The first parameter may be a physical quantity that uniquely varies in accordance with the traveled distance of the motorcycle 1 obtained when the ethanol percentage, contained in the fuel and determined by the percentage determining unit 105, is equal to or higher than the first reference percentage. The first parameter may be a time elapsed when the ethanol percentage, contained in the fuel and determined by the percentage determining unit 105, is equal to or higher than the first reference percentage after the fuel has been stored in the fuel tank 2. The first counting unit 110 may count the value of the first parameter in accordance with the ethanol percentage so that the higher the ethanol percentage in the fuel, the greater the amount of change in the value of the first parameter. For example, it is assumed that when the ethanol percentage is 100%, clogging of the fuel filter 60 is more likely occur than when the ethanol percentage is 70%. Therefore, the first counting unit 110 may be set so as to count a value obtained by multiplying the value of the first parameter including the traveled distance by a given coefficient. Note that measurement of the elapsed time after the fuel has been stored in the fuel tank 2 may be started when a switch for elapsed time measurement is pressed by the user after the fuel has been stored in the fuel tank 2, or when supply of the fuel to the inside of the fuel tank 2 is detected by the fuel sensor 79, for example.

As used herein, the "physical quantity that uniquely varies in accordance with the traveled distance" may be, for example, a total rotational frequency of the engine 4, the amount of the injected fuel, a traveling time, or a time during which the fuel pump 48 is energized.

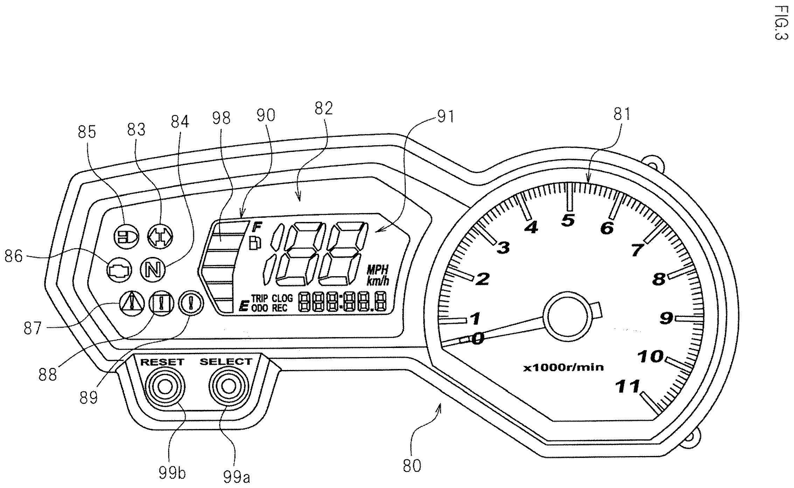

The first determination unit 115 determines whether or not the value of the first parameter counted by the first counting unit 110 has reached a given first determination value. Upon determination by the first determination unit 115 that the value of the first parameter has reached the first determination value, the notification unit 120 provides notification to the user. During, before or after the notification, the notification unit 120 may provide different notification responsive to the value of the first parameter counted by the first counting unit 110. Providing of the different notification responsive to the value of the first parameter may be, for example, providing of notification of the value of the first parameter itself, providing of prior notification before the value of the first parameter reaches the first determination value, or providing of a warning that strongly urges the user to replace the fuel filter 60 after the value of the first parameter has reached the first determination value. Note that a method for providing notification is not limited to any particular method. Notification may be provided by using visual display, sound or bodily sensation (vibration), for example. In the present preferred embodiment, visual notification is provided to the user via an indicator panel 80 (see FIG. 3). The first storage unit 125 stores the value of the first parameter. The first storage unit 125 preferably includes a nonvolatile memory.

The ECU 100 preferably further includes a second counting unit 130, a second determination unit 135, and a second storage unit 140. The second counting unit 130 counts a value of a second parameter. The second parameter may be a traveled distance of the motorcycle 1 obtained when the ethanol percentage, contained in the fuel and determined by the percentage determining unit 105, is equal to or lower than a third reference percentage which is lower than the first reference percentage. The second parameter may be a physical quantity that uniquely varies in accordance with the traveled distance of the motorcycle 1 obtained when the ethanol percentage, contained in the fuel and determined by the percentage determining unit 105, is equal to or lower than the third reference percentage. The second parameter may be a time elapsed when the ethanol percentage, contained in the fuel and determined by the percentage determining unit 105, is equal to or lower than the third reference percentage after the fuel has been stored in the fuel tank 2. Note that the second counting unit 130 may count the value of the second parameter in accordance with the ethanol percentage so that the lower the ethanol percentage in the fuel, the greater the amount of change in the value of the second parameter. For example, it is assumed that when the ethanol percentage is 20%, unclogging of the fuel filter 60 is more likely to proceed than when the ethanol percentage is 50%. Therefore, the second counting unit 130 may be set so as to count a value obtained by multiplying the value of the second parameter including the traveled distance by a given coefficient.

The second determination unit 135 determines whether or not the value of the second parameter counted by the second counting unit 130 has reached a given second determination value. Upon determination by the second determination unit 135 that the value of the second parameter has reached the second determination value, the notification unit 120 provides notification to the user. The notification unit 120 may provide, when the second counting unit 130 counts the value of the second parameter, notification responsive to the value of the second parameter counted by the second counting unit 130, instead of or together with the different notification responsive to the value of the first parameter. Providing of the notification responsive to the value of the second parameter may be, for example, providing of notification of the value of the second parameter itself or providing of prior notification before the value of the second parameter reaches the second determination value. The second storage unit 140 stores the value of the second parameter. The second storage unit 140 preferably includes a nonvolatile memory.

The ECU 100 is connected with the above-mentioned sensors so that a detection signal is transmitted to the ECU 100 from each sensor. Specifically, the ECU 100 is connected with the vehicle speed sensor 68, the rotational speed sensor 70, the temperature sensor 72, the pressure sensor 74, the throttle position sensor 76, the O₂ sensor 78, and the fuel sensor 79. When a sensor that determines the ethanol percentage in the fuel is provided inside the fuel tank 2, this sensor is also connected to the ECU 100.

The motorcycle 1 according to the present preferred embodiment preferably includes a percentage determining device, a first counting device, a first determination device, a notification device, a second counting device, and a second determination device. The percentage determining device preferably includes at least the percentage determining unit 105 and the O₂ sensor 78. The first counting device preferably includes at least the first counting unit 110 and the first storage unit 125. The first determination device preferably includes at least the first determination unit 115. The notification device preferably includes at least the notification unit 120 and the indicator panel 80 serving as a display device. The second counting device preferably includes at least the second counting unit 130 and the second storage unit 140. The second determination device preferably includes at least the second determination unit 135.

As illustrated in FIG. 3, the motorcycle 1 preferably includes the indicator panel 80 serving as a display device. As illustrated in FIG. 1, the indicator panel 80 is provided forward of the handlebar 12 of the motorcycle 1. The indicator panel 80 is provided with an engine rotational speed meter 81 and a digital panel 82. As illustrated in a left portion of FIG. 3, the indicator panel 80 is further provided with a direction indicator lamp 83, a neutral lamp 84, a headlight indicator lamp 85, and an oil temperature warning lamp 86. Each of these lamps used in the present preferred embodiment may be a conventionally known and used lamp.

The indicator panel 80 is further provided with a filter clogging warning lamp 87. Upon determination by the first determination unit 115 that the first determination value has been reached, the notification unit 120 provides notification of this determination. When this notification is provided from the notification unit 120, the filter clogging warning lamp 87 lights up or blinks. The filter clogging warning lamp 87 lights up or blinks, thus making it possible to notify the user of the motorcycle 1 that the fuel filter 60 is probably clogged. The filter clogging warning lamp 87 can be extinguished when the fuel filter 60 is replaced, when the fuel filter 60 is cleaned, or when the value of the second parameter has reached the second determination value. Note that upon determination by the second determination unit 135 that the value of the second parameter has reached the second determination value, the notification unit 120 provides notification of this determination. When this notification is provided from the notification unit 120, the filter clogging warning lamp 87 is extinguished. Thus, the user can recognize that the fuel filter 60 is presumably unclogged.

The indicator panel 80 is further provided with a filter restoration warning lamp 88. The filter restoration warning lamp 88 lights up or blinks when the ethanol percentage in the fuel is equal to or lower than the third reference percentage which is lower than the first reference percentage. The filter restoration warning lamp 88 lights up or blinks, thus making it possible to notify the user of the motorcycle 1 that the fuel filter 60 is being unclogged. The filter restoration warning lamp 88 can be extinguished when the ethanol percentage in the fuel is higher than the third reference percentage or when the fuel filter 60 is presumably unclogged.

The indicator panel 80 is further provided with a filter restoration indicator lamp 89. Upon determination by the second determination unit 135 that the second determination value has been reached, the notification unit 120 provides notification of this determination. When this notification is provided from the notification unit 120, the filter restoration indicator lamp 89 lights up or blinks. The filter restoration indicator lamp 89 lights up or blinks, thus making it possible to notify the user of the motorcycle 1 that the fuel filter 60 is presumably unclogged. The filter restoration indicator lamp 89 can be extinguished, for example, when a reset button 99b is pressed down by the user.

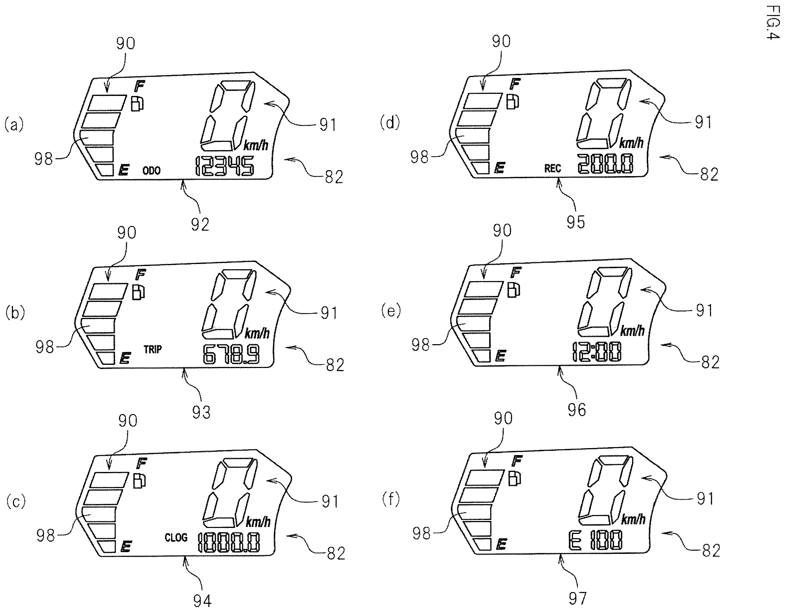

As illustrated in FIGS. 3 and 4, the digital panel 82 is provided with a fuel meter 90, a vehicle speed meter 91, an odometer 92, a trip meter 93, a clogging meter 94, a recovery meter 95, a clock 96, and an ethanol percentage indicator meter 97. In FIG. 3, all the displayable meters are displayed on the digital panel 82. The vehicle speed meter 91 is displayable either in kilometers or in miles. It is to be noted that in FIG. 4, the vehicle speed meter 91 is displayed in kilometers. A portion of the fuel meter 90 includes a bar graph 98. The fuel meter 90 indicates the amount of the fuel remaining inside the fuel tank 2 (see FIG. 2, for example) on the basis of the number of bars displayed in the bar graph 98. In other words, the number of the bars displayed in the bar graph 98 is reduced as the fuel is consumed. The clogging meter 94 indicates the value of the first parameter counted by the first counting unit 110. The recovery meter 95 indicates the value of the second parameter counted by the second counting unit 130. The ethanol percentage indicator meter 97 indicates the ethanol percentage contained in the fuel inside the fuel tank 2 and determined by the percentage determining unit 105. Display of the meter such as the odometer 92 is switchable to display of the other meter . Display of the meter such as the odometer 92 can be switched to display of the other meter by a select button 99a. In this case, the order of switching of display of the meters such as the odometer 92 is not limited to any particular order.

FIG. 4A illustrates the digital panel 82 on which the odometer 92 is displayed. FIG. 4B illustrates the digital panel 82 on which the trip meter 93 is displayed. FIG. 4C illustrates the digital panel 82 on which the clogging meter 94 is displayed. FIG. 4D illustrates the digital panel 82 on which the recovery meter 95 is displayed. FIG. 4E illustrates the digital panel 82 on which the clock 96 is displayed. And FIG. 4F illustrates the digital panel 82 on which the ethanol percentage indicator meter 97 is displayed. When the trip meter 93 is displayed on the digital panel 82, an initial value will be displayed on the trip meter 93 by pressing the reset button 99b. The initial value to be displayed is 0.0, for example.

When the clogging meter 94 is displayed, an initial value will be displayed on the clogging meter 94 upon resetting of the value of the first parameter by the first counting unit 110. Furthermore, when maintenance of the fuel filter 60 is performed, an initial value will be displayed on the clogging meter 94 by pressing the reset button 99b. The initial value to be displayed is 0.0, for example.

When the recovery meter 95 is displayed, an initial value will be displayed on the recovery meter 95 upon resetting of the value of the second parameter by the second counting unit 130. Furthermore, when maintenance of the fuel filter 60 is performed, an initial value will be displayed on the recovery meter 95 by pressing the reset button 99b. The initial value to be displayed is 0.0, for example.

As illustrated in FIG. 4F, the ethanol percentage displayed on the ethanol percentage indicator meter 97 is an ethanol percentage determined by the percentage determining unit 105 on the basis of a value detected by the O₂ sensor 78 or a value detected by an ethanol percentage determining sensor provided directly inside the fuel tank 2. As illustrated in FIG. 4F, when a fuel in which an ethanol percentage is 100% is used, "E100" is displayed on the ethanol percentage indicator meter 97 . Note that when the filter clogging warning lamp 87 lights up or blinks, the third reference percentage can be displayed on the ethanol percentage indicator meter 97 in order to urge the user to refuel the motorcycle 1 with a fuel having a low ethanol percentage. For example, the ethanol percentage indicator meter 97 lights up and blinks in such a manner that the third reference percentage and the ethanol percentage in the currently used fuel are alternately displayed. Thus, the user can refuel the motorcycle 1 with a fuel having an ethanol percentage equal to or lower than the third reference percentage.

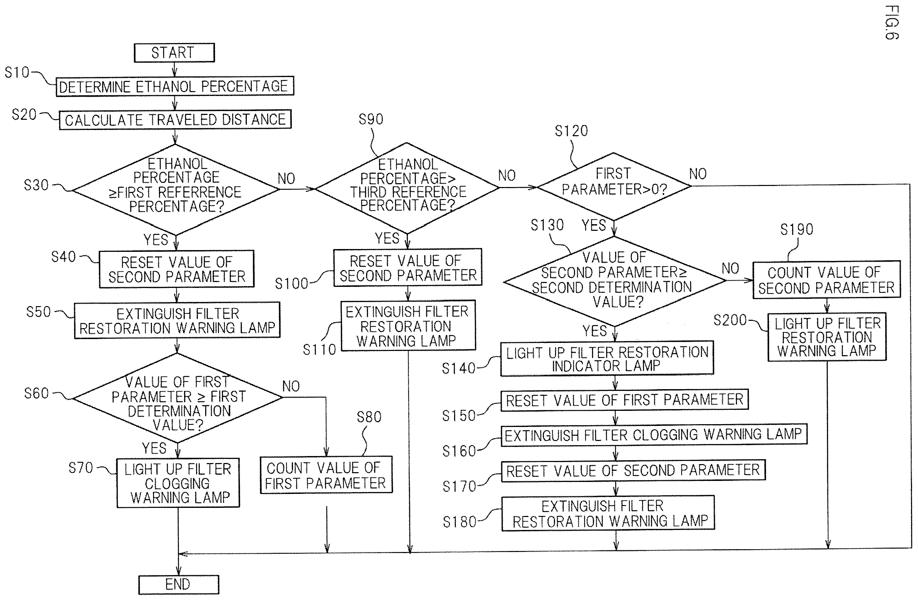

FIG. 6 is a flow chart illustrating a procedure of control of notification of clogging in the fuel filter 60. Note that in the present preferred embodiment, the following description is based on an example where the value of the first parameter is the traveled distance of the motorcycle 1 obtained when the ethanol percentage in the fuel is equal to or higher than the first reference percentage, and the value of the second parameter is the traveled distance of the motorcycle 1 obtained when the ethanol percentage in the fuel is equal to or lower than the third reference percentage. However, the present invention is not limited to this example.

First, in Step S10, the percentage determining unit 105 determines, on the basis of the value detected by the O₂ sensor 78, the ethanol percentage in the fuel used in the motorcycle 1. Subsequently, in Step S20, the traveled distance calculation unit 145 calculates, on the basis of the vehicle speed detected by the vehicle speed sensor 68, the traveled distance of the motorcycle 1 in which the fuel having the ethanol percentage determined in Step S10 is used.

Then, in Step S30, the percentage determining unit 105 determines whether or not the ethanol percentage in the fuel is equal to or higher than the preset first reference percentage. The control procedure goes to Step S40 when the ethanol percentage is equal to or higher than the first reference percentage, but goes to Step S90 when the ethanol percentage is lower than the first reference percentage. In the present preferred embodiment, the first reference percentage can be appropriately set at a value at which foreign matter is deemed likely to be accumulated in the fuel filter 60. For example, the first reference percentage can be set at 70%.

Step S40 is performed when the ethanol percentage is equal to or higher than the first reference percentage. In Step S40, the second counting unit 130 resets the value of the second parameter stored in the second storage unit 140 because the ethanol percentage in the fuel is equal to or higher than the first reference percentage which is higher than the third reference percentage. In this case, the value displayed on the recovery meter 95 is also reset and the initial value is displayed thereon. In the present preferred embodiment, the third reference percentage can be appropriately set at a value at which foreign matter adhered to the fuel filter 60 is deemed likely to be removed to unclog the fuel filter 60. For example, the third reference percentage can be set at 50%. Note that in Step S40, the value of the second parameter is reset in order to more reliably notify the user that the fuel filter 60 is clogged. In other words, although it is believed that unclogging of the fuel filter 60 will proceed with the use of a fuel having an ethanol percentage equal to or lower than the third reference percentage, the value of the second parameter is reset in order to increase the reliability of notification of unclogging of the fuel filter 60. However, the value of the second parameter may be stored in the second storage unit 140 without being reset.

After the process of Step S40 has been performed, the control procedure then goes to Step S50 in which the notification unit 120 allows the filter restoration warning lamp 88 of the indicator panel 80 to be extinguished. In this process step, the second counting unit 130 supplies, to the notification unit 120, a signal indicating that the value of the second parameter has been reset. Note that when the filter restoration warning lamp 88 is not lit up before start of the process of Step S50, the control procedure skips Step S50 and goes to Step S60. Step S40 and Step S50 may be interchanged or may be performed concurrently.

In Step S60, the first determination unit 115 determines whether or not the value of the first parameter counted by the first counting unit 110 is equal to or higher than the preset first determination value. Specifically, the control procedure goes to Step S70 when the value of the first parameter stored in the first storage unit 125 is equal to or higher than the first determination value, but goes to Step S80 when the value of the first parameter is lower than the first determination value. In the present preferred embodiment, the first determination value can be appropriately set at a value (e.g., a traveled distance in the present preferred embodiment) at which replacement of the fuel filter 60 is deemed necessary due to clogging of the fuel filter 60.

In Step S70, the notification unit 120 allows the filter clogging warning lamp 87 of the indicator panel 80 to light up because the value of the first parameter has reached the first determination value. Thus, the user can recognize that the fuel filter 60 is probably clogged, and can grasp an appropriate time for maintenance of the fuel filter 60. Note that when the filter clogging warning lamp 87 is lit up before start of the process of Step S70, the control procedure ends without performing Step S70.

Step S80 is performed when the value of the first parameter has not reached the first determination value. In Step S80, the first counting unit 110 counts the value of the first parameter. In this process step, the value of the first parameter, being the traveled distance of the motorcycle 1 calculated in Step S20, is added to the value of the first parameter stored in the first storage unit 125.

Upon determination in Step S30 that the ethanol percentage is lower than the first reference percentage, the control procedure goes to Step S90. In Step S90, the percentage determining unit 105 determines whether or not the ethanol percentage in the fuel is higher than the preset third reference percentage. The control procedure goes to Step S100 when the ethanol percentage is higher than the third reference percentage, but goes to Step S120 when the ethanol percentage is equal to or lower than the third reference percentage.

Step S100 is performed when the ethanol percentage is higher than the third reference percentage. In Step S100, the second counting unit 130 resets the value of the second parameter stored in the second storage unit 140 because the ethanol percentage in the fuel is higher than the third reference percentage and lower than the first reference percentage. In this case, the value displayed on the recovery meter 95 is also reset and the initial value is displayed thereon. It is assumed that when the fuel having the ethanol percentage falling within the above range is used, virtually no foreign matter will be accumulated in the fuel filter 60, and virtually no removal of foreign matter adhered to the fuel filter 60 will occur. Therefore, in Step S100, the second counting unit 130 may store the value of the second parameter in the second storage unit 140 instead of resetting this value. Note that the value of the second parameter is preferably reset in order to increase the reliability of notification of unclogging of the fuel filter 60.

After the process of Step S100 has been performed, the control procedure then goes to Step S110 in which the notification unit 120 allows the filter restoration warning lamp 88 of the indicator panel 80 to be extinguished. Note that when the filter restoration warning lamp 88 is not lit up before start of the process of Step S110, the control procedure ends without performing Step S110. Step S100 and Step S110 may be interchanged or may be performed concurrently.

Upon determination in Step S90 that the ethanol percentage is equal to or lower than the third reference percentage, the control procedure goes to Step S120. In Step S120, the first determination unit 115 determines whether or not the value of the first parameter is greater than zero. The control procedure goes to Step S130 when the value of the first parameter is greater than zero, but the control procedure ends when the value of the first parameter is zero.

In Step S130, the second determination unit 135 determines whether or not the value of the second parameter counted by the second counting unit 130 is equal to or higher than the preset second determination value. Specifically, the control procedure goes to Step S140 when the value of the second parameter stored in the second storage unit 140 is equal to or higher than the second determination value, but goes to Step S190 when the value of the second parameter is lower than the second determination value. In the present preferred embodiment, the second determination value can be appropriately set at a value (e.g., a traveled distance in the present embodiment) at which foreign matter adhered to the fuel filter 60 is deemed to be removed and the fuel filter 60 is deemed to be unclogged.

Step S140 is performed when the value of the second parameter is equal to or higher than the second determination value. In Step S140, the notification unit 120 allows the filter restoration indicator lamp 89 of the indicator panel 80 to light up because the value of the second parameter has reached the second determination value. Thus, the user can recognize that the fuel filter 60 is presumably unclogged.

In Step S150, the first counting unit 110 resets the value of the first parameter stored in the first storage unit 125 because the value of the second parameter has reached the second determination value. In this case, the value displayed on the clogging meter 94 is also reset and the initial value is displayed thereon.

After the process of Step S150 has been performed, the control procedure then goes to Step S160 in which the notification unit 120 allows the filter clogging warning lamp 87 of the indicator panel 80 to be extinguished. Upon extinguishment of the filter clogging warning lamp 87, the user can recognize that the fuel filter 60 is presumably unclogged. Note that Step S150 and Step S160 may be interchanged or may be performed concurrently.

After the process of Step S160 has been performed, the control procedure then goes to Step S170 in which the second counting unit 130 resets the value of the second parameter stored in the second storage unit 140 because the value of the second parameter has reached the second determination value. In this case, the value displayed on the recovery meter 95 is also reset and the initial value is displayed thereon.

After the process of Step S170 has been performed, the control procedure then goes to Step S180 in which the notification unit 120 allows the filter restoration warning lamp 88 of the indicator panel 80 to be extinguished. Thus, the user can recognize that the fuel filter 60 is presumably unclogged. Note that Step S170 and Step S180 may be interchanged or may be performed concurrently.

Step S190 is performed when the value of the second parameter has not reached the second determination value. In Step S190, the second counting unit 130 counts the value of the second parameter. In this process step, the value of the second parameter, being the traveled distance of the motorcycle 1 calculated in Step S20, is added to the value of the second parameter stored in the second storage unit 140.

In Step S200, the notification unit 120 allows the filter restoration warning lamp 88 of the indicator panel 80 to light up because the ethanol percentage in the fuel is equal to or lower than the third reference percentage and the value of the second parameter has not reached the second determination value. Thus, the user can recognize that the fuel filter 60 is being unclogged. Note that when the filter restoration warning lamp 88 is lit up before start of the process of Step S200, the control procedure ends without performing Step S200. When the filter clogging warning lamp 87 is not lit up, the filter restoration warning lamp 88 may be prevented from lighting up in Step S200.

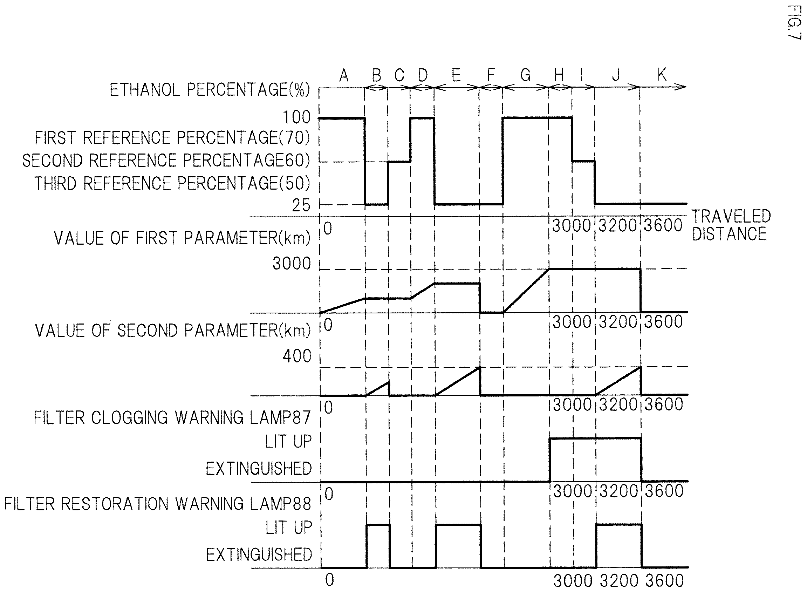

FIG. 7 is a timing chart for control of notification of clogging in the fuel filter 60. The following description is based on an example where the first, second and third reference percentages for an ethanol percentage are 70%, 60% and 50%, respectively, the first determination value for the value of the first parameter including a traveled distance of the motorcycle 1 is 3000 km, and the second determination value for the value of the second parameter including a traveled distance of the motorcycle 1 is 400 km. However, the present invention is not limited to this example.

In each region of FIG. 7, the percentage determining unit 105 determines, on the basis of the value detected by the O₂ sensor 78, the ethanol percentage in the fuel used in the motorcycle 1. First, in a region A of FIG. 7, the fuel in which the ethanol percentage is 100% is used, and the percentage determining unit 105 determines that the ethanol percentage in the fuel being used is equal to or higher than the first reference percentage. Therefore, the first counting unit 110 counts the value of the first parameter including the traveled distance of the motorcycle 1.

In a region B of FIG. 7, the fuel in which the ethanol percentage is 25% is used, and the percentage determining unit 105 determines that the ethanol percentage in the fuel being used is equal to or lower than the third reference percentage. Therefore, the first counting unit 110 stops counting the value of the first parameter. The value of the first parameter counted thus far is stored in the first storage unit 125. Meanwhile, the second counting unit 130 counts the value of the second parameter including the traveled distance of the motorcycle 1. The notification unit 120 allows the filter restoration warning lamp 88 of the indicator panel 80 to light up. Note that in the region B of FIG. 7, the filter restoration warning lamp 88 may be prevented from lighting up because the filter clogging warning lamp 87 is not lit up.

In a region C of FIG. 7, the fuel in which the ethanol percentage is 60% is used, and the percentage determining unit 105 determines that the ethanol percentage in the fuel being used is equal to or lower than the first reference percentage and is higher than the third reference percentage. Therefore, the second counting unit 130 stops counting the value of the second parameter and resets the value of the second parameter stored in the second storage unit 140. In this case, the value displayed on the recovery meter 95 is also reset and the initial value is displayed thereon. The notification unit 120 allows the filter restoration warning lamp 88 of the indicator panel 80 to be extinguished.

In a region D of FIG. 7, the percentage determining unit 105 determines that the ethanol percentage in the fuel being used is equal to or higher than the first reference percentage. Therefore, the first counting unit 110 restarts counting from the value of the first parameter stored in the first storage unit 125.

In a region E of FIG. 7, the percentage determining unit 105 determines that the ethanol percentage in the fuel being used is equal to or lower than the third reference percentage. Therefore, the first counting unit 110 stops counting the value of the first parameter. The value of the first parameter counted thus far is stored in the first storage unit 125. Meanwhile, the second counting unit 130 counts the value of the second parameter that is the traveled distance of the motorcycle 1. The notification unit 120 allows the filter restoration warning lamp 88 of the indicator panel 80 to light up. Note that in the region E of FIG. 7, the filter restoration warning lamp 88 may be prevented from lighting up because the filter clogging warning lamp 87 is not lit up.

In a region F in FIG. 7, the second determination unit 135 determines that the value of the second parameter has reached the preset second determination value (which is 400 km in this example) . Therefore, the notification unit 120 allows the filter restoration indicator lamp 89 of the indicator panel 80 to light up. The first counting unit 110 resets the value of the first parameter stored in the first storage unit 125. In this case, the value displayed on the clogging meter 94 is also reset and the initial value is displayed thereon. The second counting unit 130 resets the value of the second parameter stored in the second storage unit 140. In this case, the value displayed on the recovery meter 95 is also reset and the initial value is displayed thereon. The notification unit 120 allows the filter restoration warning lamp 88 of the indicator panel 80 to be extinguished.

In a region G of FIG. 7, the percentage determining unit 105 determines that the ethanol percentage in the fuel being used is equal to or higher than the first reference percentage. Therefore, the first counting unit 110 counts the value of the first parameter.

In a region H of FIG. 7, the first determination unit 115 determines that the value of the first parameter has reached the preset first determination value (which is 3000 km in this example) . Therefore, the first counting unit 110 stops counting the value of the first parameter. The notification unit 120 allows the filter clogging warning lamp 87 of the indicator panel 80 to light up. Note that the first counting unit 110 may continue counting the value of the first parameter even after the value of the first parameter has reached the first determination value. Thus, the severity of a warning to the user can be increased in accordance with the value of the parameter so as to urge the user to replace the fuel filter 60 early.

In a region I of FIG. 7, the percentage determining unit 105 determines that the ethanol percentage in the fuel being used is equal to or lower than the first reference percentage and is higher than the third reference percentage. However, when the fuel has the ethanol percentage falling within this range, unclogging of the fuel filter 60 does not proceed. Therefore, the filter clogging warning lamp 87 is still lit up.

In a region J of FIG. 7, the percentage determining unit 105 determines that the ethanol percentage in the fuel being used is equal to or lower than the third reference percentage. Therefore, the second counting unit 130 counts the value of the second parameter including the traveled distance of the motorcycle 1. The notification unit 120 allows the filter restoration warning lamp 88 of the indicator panel 80 to light up. Note that since the fuel filter 60 is not unclogged, the filter clogging warning lamp 87 is still lit up.

In a region K of FIG. 7, the second determination unit 135 determines that the value of the second parameter has reached the preset second determination value. Therefore, the notification unit 120 allows the filter restoration indicator lamp 89 of the indicator panel 80 to light up. The first counting unit 110 resets the value of the first parameter stored in the first storage unit 125. In this case, the value displayed on the clogging meter 94 is also reset and the initial value is displayed thereon. The notification unit 120 allows the filter clogging warning lamp 87 of the indicator panel 80 to be extinguished. Meanwhile, the second counting unit 130 resets the value of the second parameter stored in the second storage unit 140. In this case, the value displayed on the recovery meter 95 is also reset and the initial value is displayed thereon. The notification unit 120 allows the filter restoration warning lamp 88 of the indicator panel 80 to be extinguished.

Note that in the present preferred embodiment, the first counting unit 110 counts the value of the first parameter, which is then stored in the first storage unit 125, and the second counting unit 130 counts the value of the second parameter, which is then stored in the second storage unit 140. With consideration given to the fact that unclogging of the fuel filter 60 proceeds when a fuel having a low ethanol percentage (i.e., a fuel having an ethanol percentage equal to or lower than the third reference percentage) is used, the second parameter may be multiplied by a given coefficient and the resulting value may be subtracted from the value of the first parameter, for example, when a fuel having an ethanol percentage equal to or lower than the third reference percentage is used. In that case, the degree of clogging of the fuel filter 60 can be estimated in more detail.

As described above, in the motorcycle 1 according to the present preferred embodiment, the percentage determining unit 105 determines an ethanol percentage in a fuel inside the fuel tank 2, and the first counting unit 110 counts the value of the first parameter when the ethanol percentage is equal to or higher than the first reference percentage at which foreign matter is deemed likely to be accumulated. Then, upon determination by the first determination unit 115 that the value of the first parameter has reached the first determination value at which replacement of the fuel filter 60 is deemed necessary, the notification unit 120 allows the filter clogging warning lamp 87 to light up or blink. As a result, the user can recognize that the fuel filter 60 is probably clogged, and can grasp an appropriate time for maintenance of the fuel filter 60.

According to the present preferred embodiment, the motorcycle 1 (or the first counting device) preferably includes the first storage unit 125 that stores the value of the first parameter. The first counting unit 110 is preferably configured to store, in the first storage unit 125, the value of the first parameter obtained when the ethanol percentage is equal to or lower than the second reference percentage which is lower than the first reference percentage, and to then restart counting from the value of the first parameter, stored in the first storage unit 125, when the ethanol percentage is equal to or higher than the first reference percentage. It is believed that when the ethanol percentage in the fuel is equal to or lower than the second reference percentage, clogging of the fuel filter 60 does not proceed. However, foreign matter, accumulated in the fuel filter 60 when the fuel having the ethanol percentage equal to or higher than the first reference percentage is used, might still be adhered to the fuel filter 60. Therefore, the first counting unit 110 may temporarily stop counting the value of the first parameter when the ethanol percentage in the fuel is equal to or lower than the second reference percentage, and may restart counting from the previously stored value when the ethanol percentage in the fuel is equal to or higher than the first reference percentage, thus making it possible to more accurately estimate clogging of the fuel filter 60.

According to the present preferred embodiment, the first counting unit 110 is preferably configured to count the value of the first parameter in accordance with the ethanol percentage so that the higher the ethanol percentage, the greater the amount of change in the value of the first parameter. It is believed that the higher the ethanol percentage in the fuel, the more likely the fuel filter 60 will be clogged, and therefore, clogging of the fuel filter 60 can be more accurately estimated when the first counting unit 110 is configured as described above.

According to the present preferred embodiment, the notification unit 120 is preferably configured to provide, during, before or after the above-described notification, different notification responsive to the value of the first parameter counted by the first counting unit 110. The notification responsive to the value of the first parameter is provided in this manner, thereby allowing the user to grasp the degree of clogging of the fuel filter 60 in more detail.

According to the present preferred embodiment, the motorcycle 1 preferably further includes: the second counting unit 130 that counts the value of the second parameter when the ethanol percentage is equal to or lower than the third reference percentage which is lower than the first reference percentage; and the second determination unit 135 that determines whether or not the value of the second parameter counted by the second counting unit 130 has reached the second determination value. The first counting unit 110 is preferably configured to reset the value of the first parameter, counted by the first counting unit 110, upon determination by the second determination unit 135 that the second determination value has been reached. When the motorcycle 1 has traveled a certain distance by using the fuel in which the ethanol percentage is equal to or lower than the third reference percentage, foreign matter adhered to the fuel filter 60 is removed and the fuel filter 60 is unclogged. Therefore, when the motorcycle 1 has traveled a certain distance by using the fuel in which the ethanol percentage is equal to or lower than the third reference percentage, the value of the first parameter counted by the first counting unit 110 is reset, thus making it possible to avoid providing notification that the fuel filter 60 is probably clogged even though the fuel filter 60 is actually not clogged.

According to the present preferred embodiment, the notification unit 120 is preferably configured to allow the filter restoration indicator lamp 89 to light up or blink upon determination by the second determination unit 135 that the value of the second parameter has reached the second determination value. The filter restoration indicator lamp 89 is activated in this manner, thereby allowing the user to recognize that the fuel filter 60 is presumably unclogged.

According to the present preferred embodiment, the notification unit 120 is preferably configured to allow the filter restoration warning lamp 88 to light up or blink when the second counting unit 130 counts the value of the second parameter. The filter restoration warning lamp 88 is activated in this manner, thereby allowing the user to recognize that the fuel filter 60 is being unclogged.

According to the present preferred embodiment, the notification unit 120 is preferably configured to provide, when the second counting unit 130 counts the value of the second parameter, notification responsive to the value of the second parameter counted by the second counting unit 130, instead of or together with the different notification. The notification responsive to the value of the second parameter is provided in this manner, thereby allowing the user to grasp the degree of unclogging of the fuel filter 60 in more detail.

According to the present preferred embodiment, the second counting unit 130 is preferably configured to reset the value of the second parameter, counted by the second counting unit 130, when the ethanol percentage is higher than the third reference percentage. Thus, the value of the first parameter counted by the first counting unit 110 will be reset when the fuel filter 60 is more probably unclogged. Hence, when the fuel filter 60 is clogged, notification of this fact can be more reliably provided to the user.

According to the present preferred embodiment, the motorcycle 1 (or the second counting device) preferably includes the second storage unit 140 that stores the value of the second parameter. The second counting unit 130 is preferably configured to store, in the second storage unit 140, the value of the second parameter obtained when the ethanol percentage is lower than the first reference percentage and is higher than the third reference percentage, and to then restart counting from the value of the second parameter, stored in the second storage unit 140, when the ethanol percentage is equal to or lower than the third reference percentage. Thus, when the fuel having the ethanol percentage at which neither clogging nor unclogging of the fuel filter 60 proceeds is used, the second counting unit 130 temporarily stops counting the value of the second parameter, and then restarts counting from the previously stored value when the ethanol percentage in the fuel is equal to or lower than the third reference percentage, thereby making it possible to more accurately estimate unclogging of the fuel filter 60.

According to the present preferred embodiment, the second counting unit 130 is preferably configured to count the value of the second parameter in accordance with the ethanol percentage so that the lower the ethanol percentage, the greater the amount of change in the value of the second parameter. It is believed that the lower the ethanol percentage in the fuel, the more likely the unclogging of the fuel filter 60 will proceed, and therefore, the degree of unclogging of the fuel filter 60 can be more accurately estimated when the second counting unit 130 is configured as described above.

According to the present preferred embodiment, the motorcycle 1 (or the notification device) preferably includes the indicator panel 80. Thus, the user can visually recognize information on the fuel filter 60, and can easily grasp the degree of clogging of the fuel filter 60 or the degree of unclogging of the fuel filter 60.

### REFERENCE SIGNS LIST

- 1: motorcycle (vehicle)
- 2: fuel tank
- 4: engine
- 47: fuel passage
- 48: fuel pump
- 60: fuel filter
- 68: vehicle speed sensor
- 78: O₂ sensor
- 80: indicator panel (display device)
- 82: digital panel
- 87: filter clogging warning lamp
- 88: filter restoration warning lamp
- 89: filter restoration indicator lamp
- 94: clogging meter
- 95: recovery meter
- 97: ethanol percentage indicator meter
- 100: controller (ECU)
- 105: percentage determining unit
- 110: first counting unit
- 115: first determination unit
- 120: notification unit
- 125: first storage unit
- 130: second counting unit
- 135: second determination unit
- 140: second storage unit
- 145: traveled distance calculation unit

## Claims

1. A vehicle (1) comprising: an engine (4) capable of producing a driving force by combustion of a fuel containing gasoline and alcohol; and a fuel filter (60) located inside a fuel tank (2) that stores the fuel or inside a fuel passage (47) through which the fuel supplied from the fuel tank (2) is configured to flow,
the vehicle (1) further comprising:
a percentage determining device (105) that is configured to determine an alcohol percentage in the fuel;
**characterized in that** the vehicle (1) further comprises:
a first counting device (110) that is configured to count a value of a first parameter including any one of a traveled distance of the vehicle (1) obtained when the alcohol percentage is equal to or higher than a first reference percentage, a physical quantity that uniquely varies in accordance with the traveled distance obtained when the alcohol percentage is equal to or higher than the first reference percentage, or a time elapsed when the alcohol percentage is equal to or higher than the first reference percentage after the fuel has been stored;
a first determination device (115) that is configured to determine whether or not the value of the first parameter counted by the first counting device (110) has reached a first determination value; and
a notification device (120) that is configured to provide notification to a user upon determination by the first determination device (115) that the value of the first parameter has reached the first determination value.

2. The vehicle (1) according to Claim 1,
wherein the first counting device (110) comprises a first storage unit (125) that is configured to store the value of the first parameter, the first counting device (110) being configured to store, in the first storage unit (125), the value of the first parameter obtained when the alcohol percentage is equal to or lower than a second reference percentage which is lower than the first reference percentage, and to then restart counting from the value of the first parameter, stored in the first storage unit (125), when the alcohol percentage is equal to or higher than the first reference percentage.

3. The vehicle (1) according to Claim 1,
wherein the first counting device (110) is configured to count the value of the first parameter in accordance with the alcohol percentage so that the higher the alcohol percentage, the greater the amount of change in the value of the first parameter.

4. The vehicle (1) according to Claim 1,
wherein the notification device (120) is configured to provide, during, before or after the notification, different notification responsive to the value of the first parameter counted by the first counting device (110).

5. The vehicle (1) according to Claim 1, further comprising:
a second counting device (130) that is configured to count a value of a second parameter including any one of a traveled distance of the vehicle (1) obtained when the alcohol percentage is equal to or lower than a third reference percentage which is lower than the first reference percentage, a physical quantity that uniquely varies in accordance with the traveled distance obtained when the alcohol percentage is equal to or lower than the third reference percentage, or a time elapsed when the alcohol percentage is equal to or lower than the third reference percentage after the fuel has been stored; and
a second determination device (135) that is configured to determine whether or not the value of the second parameter counted by the second counting device (130) has reached a second determination value,
wherein the first counting device (110) is configured to reset the value of the first parameter, counted by the first counting device (110), upon determination by the second determination device (135) that the value of the second parameter has reached the second determination value.

6. The vehicle (1) according to Claim 5,
wherein the notification device (120) is configured to provide different notification upon determination by the second determination device (135) that the value of the second parameter has reached the second determination value.

7. The vehicle (1) according to Claim 5,
wherein the notification device (120) is configured to provide different notification when the second counting device (130) counts the value of the second parameter.

8. The vehicle (1) according to Claim 7,
wherein the notification device (120) is configured to provide, when the second counting device (130) counts the value of the second parameter, notification responsive to the value of the second parameter counted by the second counting device (130), instead of or together with the different notification.

9. The vehicle (1) according to Claim 5,
wherein the second counting device (130) is configured to reset, when the alcohol percentage is higher than the third reference percentage, the value of the second parameter counted by the second counting device (130).

10. The vehicle (1) according to Claim 5,
wherein the second counting device (130) comprises a second storage unit (140) that is configured to store the value of the second parameter, the second counting device (130) being configured to store, in the second storage unit (140), the value of the second parameter obtained when the alcohol percentage is lower than the first reference percentage and higher than the third reference percentage, and to then restart counting from the value of the second parameter, stored in the second storage unit (140), when the alcohol percentage is equal to or lower than the third reference percentage.

11. The vehicle (1) according to Claim 5,
wherein the second counting device (130) is configured to count the value of the second parameter in accordance with the alcohol percentage so that the lower the alcohol percentage, the greater the amount of change in the value of the second parameter.

12. The vehicle (1) according to Claim 1,
wherein the notification device (120) comprises a display device (80).

## Patentansprüche

1. Ein Fahrzeug (1), aufweisend: einen Motor (4), der fähig ist, eine Antriebskraft durch Verbrennung eines Kraftstoffs, der Benzin und Alkohol enthält, zu erzeugen; und einen Kraftstofffilter (60), der innerhalb eines Kraftstofftanks (2), der den Kraftstoff aufnimmt, oder innerhalb eines Kraftstoffdurchflusses (47) gelegen ist, durch den der von dem Kraftstofftank (2) bereitgestellte Kraftstoff ausgestaltet ist zu fließen,
wobei das Fahrzeug (1) weiterhin aufweist:
eine Prozentgehaltsbestimmungseinrichtung (105), die ausgestaltet ist, einen Alkoholprozentgehalt in dem Kraftstoff zu bestimmen;
**dadurch gekennzeichnet, dass** das Fahrzeug (1) weiterhin aufweist:
eine erste Zählereinrichtung (110), die ausgestaltet ist, einen Wert eines ersten Parameters, der irgendeine von einer zurückgelegten Distanz des Fahrzeugs (1), die erhalten wird, wenn der Alkoholprozentgehalt gleich oder höher als ein erster Referenzprozentgehalt ist, einer physikalischen Größe, die sich in einzigartiger Weise im Einklang mit der zurückgelegten Distanz verändert, die erhalten wird, wenn der Alkoholprozentgehalt gleich oder höher als der erste Referenzprozentgehalt ist, oder einer vergangenen Zeit, wenn der Alkoholprozentgehalt gleich oder höher als der erste Referenzprozentgehalt ist, nachdem der Kraftstoff aufgenommen wurde, beinhaltet; eine erste Bestimmungseinrichtung (115), die ausgestaltet ist, zu bestimmen, ob der Wert des ersten Parameters, der von der ersten Zählereinrichtung (110) gezählt wird, einen ersten Bestimmungswert erreicht hat oder nicht; und
eine Mitteilungseinrichtung (120), die ausgestaltet ist, einem Benutzer auf Bestimmung von der ersten Bestimmungseinrichtung (115), dass der Wert des ersten Parameters den ersten Bestimmungswert erreicht hat, Mitteilung zu machen.

2. Das Fahrzeug (1) gemäß Anspruch 1,
wobei die erste Zählereinrichtung (110) eine erste Speichereinheit (125) aufweist, die ausgestaltet ist, den Wert des ersten Parameters zu speichern, wobei die erste Zählereinrichtung (110) ausgestaltet ist, den Wert des ersten Parameters, der erhalten wird, wenn der Alkoholprozentgehalt gleich oder niedriger als ein zweiter Referenzprozentgehalt ist, der niedriger als der erste Referenzprozentgehalt ist, in der ersten Speichereinheit (125) zu speichern, und dann das Zählen von dem Wert des ersten Parameters, der in der ersten Speichereinheit (125) gespeichert ist, wiederaufzunehmen, wenn der Alkoholprozentgehalt gleich oder höher als der erste Referenzprozentgehalt ist.

3. Das Fahrzeug (1) gemäß Anspruch 1,
wobei die erste Zählereinrichtung (110) ausgestaltet ist, den Wert des ersten Parameters so in Einklang mit dem Alkoholprozentgehalt zu zählen, dass je höher der Alkoholprozentgehalt ist, desto größer der Änderungsbetrag in dem Wert des ersten Parameters ist.

4. Das Fahrzeug (1) gemäß Anspruch 1,
wobei die Mitteilungseinrichtung (120) ausgestaltet ist, während, vor oder nach der Mitteilung, unterschiedliche Mitteilung in Reaktion auf den Wert des ersten Parameters zu machen, der von der ersten Zählereinrichtung (110) gezählt wird.

5. Das Fahrzeug (1) gemäß Anspruch 1, weiterhin aufweisend:
eine zweite Zählereinrichtung (130), die ausgestaltet ist, einen Wert eines zweiten Parameters, der irgendeine von einer zurückgelegten Distanz des Fahrzeugs (1), die erhalten wird, wenn der Alkoholprozentgehalt gleich oder niedriger als ein dritter Referenzprozentgehalt ist, der niedriger als der erste Referenzprozentgehalt ist, einer physikalischen Größe, die sich in einzigartiger Weise im Einklang mit der zurückgelegten Distanz verändert, die erhalten wird, wenn der Alkoholprozentgehalt gleich oder niedriger als der dritte Referenzprozentgehalt ist, oder einer vergangenen Zeit, wenn der Alkoholprozentgehalt gleich oder niedriger als der dritte Referenzprozentgehalt ist, nachdem der Kraftstoff aufgenommen wurde, beinhaltet; und
eine zweite Bestimmungseinrichtung (135), die ausgestaltet ist, zu bestimmen, ob der Wert des zweiten Parameters, der von der zweiten Zählereinrichtung (130) gezählt wird, einen zweiten Bestimmungswert erreicht hat oder nicht,
wobei die erste Zählereinrichtung (110) ausgestaltet ist, den Wert des ersten Parameters, der von der ersten Zählereinrichtung (110) gezählt wird, auf Bestimmung von der zweiten Bestimmungseinrichtung (135), dass der Wert des zweiten Parameters den zweiten Bestimmungswert erreicht hat, zurückzusetzen.

6. Das Fahrzeug (1) gemäß Anspruch 5,
wobei die Mitteilungseinrichtung (120) ausgestaltet ist, unterschiedliche Mitteilung auf Bestimmung von der zweiten Bestimmungseinrichtung (135), dass der Wert des zweiten Parameters den zweiten Bestimmungswert erreicht hat, zu machen.

7. Das Fahrzeug (1) gemäß Anspruch 5,
wobei die Mitteilungseinrichtung (120) ausgestaltet ist, unterschiedliche Mitteilung zu machen, wenn die zweite Zählereinrichtung (130) den Wert des zweiten Parameters zählt.

8. Das Fahrzeug (1) gemäß Anspruch 7,
wobei die Mitteilungseinrichtung (120) ausgestaltet ist, wenn die zweite Zählereinrichtung (130) den Wert des zweiten Parameters zählt, Mittteilung in Reaktion auf den Wert des zweiten Parameters, der von der zweiten Zählereinrichtung (130) gezählt wird, anstatt oder zusammen mit der unterschiedlichen Mitteilung zu machen.

9. Das Fahrzeug (1) gemäß Anspruch 5,
wobei die zweite Zählereinrichtung (130) ausgestaltet ist, den Wert des zweiten Parameters, der von der zweiten Zählereinrichtung (130) gezählt wird, zurückzusetzen, wenn der Alkoholprozentgehalt höher als der dritte Referenzprozentgehalt ist.

10. Das Fahrzeug (1) gemäß Anspruch 5,
wobei die zweite Zählereinrichtung (130) eine zweite Speichereinheit (140) aufweist, die ausgestaltet ist, den Wert des zweiten Parameters zu speichern, wobei die zweite Zählereinrichtung (130) ausgestaltet ist, den Wert des zweiten Parameters, der erhalten wird, wenn der Alkoholprozentgehalt niedriger als der erste Referenzprozentgehalt und höher als der dritte Referenzprozentgehalt ist, in der zweiten Speichereinheit (140) zu speichern, und dann das Zählen von dem Wert des zweiten Parameters, der in der zweiten Speichereinheit (140) gespeichert ist, wiederaufzunehmen, wenn der Alkoholprozentgehalt gleich oder niedriger als der dritte Referenzprozentgehalt ist.

11. Das Fahrzeug (1) gemäß Anspruch 5,
wobei die zweite Zählereinrichtung (130) ausgestaltet ist, den Wert des zweiten Parameters so in Einklang mit dem Alkoholprozentgehalt zu zählen, dass je niedriger der Alkoholprozentgehalt ist, desto größer der Änderungsbetrag in dem Wert des zweiten Parameters ist.

12. Das Fahrzeug (1) gemäß Anspruch 1,
wobei die Mitteilungseinrichtung (120) eine Anzeigeeinrichtung (80) aufweist.

## Revendications

1. Véhicule (1) comprenant :
un moteur (4) capable de produire une force d'entraînement par combustion d'un carburant contenant de l'essence et de l'alcool ; et
un filtre à carburant (60) situé à l'intérieur d'un réservoir de carburant (2) qui stocke le carburant, ou à l'intérieur d'un passage de carburant (47) configuré pour permettre l'écoulement du carburant alimenté depuis le réservoir de carburant (2),
le véhicule (1) comprenant en outre :
un dispositif de détermination de pourcentage (105) qui est configuré pour déterminer un pourcentage d'alcool dans le carburant ;
**caractérisé en ce que** le véhicule (1) comprend en outre :
un premier dispositif de comptage (110) qui est configuré pour compter une valeur d'un premier paramètre comprenant une donnée quelconque parmi une distance parcourue par le véhicule (1) obtenue quand le pourcentage d'alcool est supérieur ou égal à un premier pourcentage de référence, une quantité physique qui varie de manière unique conformément à la distance parcourue obtenue quand le pourcentage d'alcool est supérieur ou égal au premier pourcentage de référence, et un temps écoulé quand le pourcentage d'alcool est supérieur ou égal au premier pourcentage de référence après le stockage du carburant ;
un premier dispositif de détermination (115) qui est configuré pour déterminer si la valeur du premier paramètre comptée par le premier dispositif de comptage (110) a atteint ou non une première valeur de détermination ; et
un dispositif de notification (120) qui est configuré pour fournir une notification à un utilisateur lors de la détermination par le premier dispositif de détermination (115) du fait que la valeur du premier paramètre a atteint la première valeur de détermination.

2. Véhicule (1) selon la revendication 1,
dans lequel le premier dispositif de comptage (110) comprend une première unité de stockage (125) qui est configurée pour stocker la valeur du premier paramètre, le premier dispositif de comptage (110) étant configuré pour stocker, dans la première unité de stockage (125), la valeur du premier paramètre obtenue quand le pourcentage d'alcool est inférieur ou égal à un deuxième pourcentage de référence qui est inférieur au premier pourcentage de référence, et pour redémarrer ensuite le comptage depuis la valeur du premier paramètre, stockée dans la première unité de stockage (125), quand le pourcentage d'alcool est supérieur ou égal au premier pourcentage de référence.

3. Véhicule (1) selon la revendication 1,
dans lequel le premier dispositif de comptage (110) est configuré pour compter la valeur du premier paramètre conformément au pourcentage d'alcool de telle sorte que plus le pourcentage d'alcool est élevé, plus la quantité de changement de valeur du premier paramètre est élevée.

4. Véhicule (1) selon la revendication 1,
dans lequel le dispositif de notification (120) est configuré pour fournir, durant, avant ou après la notification, une notification différente en réponse à la valeur du premier paramètre comptée par le premier dispositif de comptage (110).

5. Véhicule (1) selon la revendication 1, comprenant en outre :
un deuxième dispositif de comptage (130) qui est configuré pour compter une valeur d'un deuxième paramètre comprenant un paramètre quelconque parmi une distance parcourue du véhicule (1) obtenue quand le pourcentage d'alcool est inférieur ou égal à un troisième pourcentage de référence qui est inférieur au premier pourcentage de référence, une quantité physique qui varie de manière unique conformément à la distance parcourue obtenue quand le pourcentage d'alcool est inférieur ou égal au troisième pourcentage de référence, et un temps écoulé quand le pourcentage d'alcool est inférieur ou égal au troisième pourcentage de référence après le stockage du carburant ; et
un deuxième dispositif de détermination (135) qui est configuré pour déterminer si la valeur du deuxième paramètre comptée par le deuxième dispositif de comptage (130) a atteint ou non une deuxième valeur de détermination,
dans lequel le premier dispositif de comptage (110) est configuré pour rétablir la valeur du premier paramètre, comptée par le premier dispositif de comptage (110), lors de la détermination par le deuxième dispositif de détermination (135) du fait que la valeur du deuxième paramètre a atteint la deuxième valeur de détermination.

6. Véhicule (1) selon la revendication 5,
dans lequel le dispositif de notification (120) est configuré pour fournir une notification différente lors de la détermination par le deuxième dispositif de détermination (135) du fait que la valeur du deuxième paramètre a atteint la deuxième valeur de détermination.

7. Véhicule (1) selon la revendication 5,
dans lequel le dispositif de notification (120) est configuré pour fournir une notification différente quand le deuxième dispositif de comptage (130) compte la valeur du deuxième paramètre.

8. Véhicule (1) selon la revendication 7,
dans lequel le dispositif de notification (120) est configuré pour fournir, quand le deuxième dispositif de comptage (130) compte la valeur du deuxième paramètre, une notification en réponse à la valeur du deuxième paramètre comptée par le deuxième dispositif de comptage (130), au lieu de, ou conjointement avec, la notification différente.

9. Véhicule (1) selon la revendication 5,
dans lequel le deuxième dispositif de comptage (130) est configuré pour rétablir, quand le pourcentage d'alcool est supérieur au troisième pourcentage de référence, la valeur du deuxième paramètre comptée par le deuxième dispositif de comptage (130).

10. Véhicule (1) selon la revendication 5,
dans lequel le deuxième dispositif de comptage (130) comprend une deuxième unité de stockage (140) qui est configurée pour stocker la valeur du deuxième paramètre, le deuxième dispositif de comptage (130) étant configuré pour stocker, dans la deuxième unité de stockage (140), la valeur du deuxième paramètre obtenue quand le pourcentage d'alcool est inférieur au premier pourcentage de référence et supérieur au troisième pourcentage de référence, et pour redémarrer ensuite le comptage depuis la valeur du deuxième paramètre, stockée dans la deuxième unité de stockage (140), quand le pourcentage d'alcool est inférieur ou égal au troisième pourcentage de référence.

11. Véhicule (1) selon la revendication 5,
dans lequel le deuxième dispositif de comptage (130) est configuré pour compter la valeur du deuxième paramètre conformément au pourcentage d'alcool de telle sorte que plus le pourcentage d'alcool est bas, plus la quantité de changement de valeur du deuxième paramètre est élevée.

12. Véhicule (1) selon la revendication 1,
dans lequel le dispositif de notification (120) comprend un dispositif d'affichage (80).
